(19) Europäisches Patentamt / European Patent Office / Office européen des brevets

(11) **EP 4 489 093 A1**

(12) **EUROPEAN PATENT APPLICATION**
published in accordance with Art. 153(4) EPC

(43) Date of publication:
**08.01.2025 Bulletin 2025/02**

(21) Application number: **23759769.5**

(22) Date of filing: **14.02.2023**

(51) International Patent Classification (IPC):
*H01M 4/13* (2010.01)   *H01M 4/134* (2010.01)
*H01M 4/38* (2006.01)   *H01M 10/052* (2010.01)
*H01M 10/0587* (2010.01)

(52) Cooperative Patent Classification (CPC):
**H01M 4/13; H01M 4/134; H01M 4/38;**
**H01M 10/052; H01M 10/0587;** Y02E 60/10;
Y02P 70/50

(86) International application number:
**PCT/JP2023/004897**

(87) International publication number:
**WO 2023/162766 (31.08.2023 Gazette 2023/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.02.2022 JP 2022030462**

(71) Applicant: **Panasonic Intellectual Property
Management Co., Ltd.
Kadoma-shi, Osaka 571-0057 (JP)**

(72) Inventors:
• **OTSUKA, Masato
  Kadoma-shi, Osaka 571-0057 (JP)**
• **SOGA, Masahiro
  Kadoma-shi, Osaka 571-0057 (JP)**

(74) Representative: **Eisenführ Speiser
Patentanwälte Rechtsanwälte PartGmbB
Gollierstraße 4
80339 München (DE)**

(54) **SECONDARY BATTERY ELECTRODE AND SECONDARY BATTERY**

(57)   A secondary battery electrode according to one embodiment of the present invention comprises an electric current collector and active material layers formed on the electric current collector. The active material layers each include a first active material layer formed on the electric current collector, and a second active material layer formed on the electric current collector with the first active material layer interposed therebetween. As compared to the first active material layer, the second active material layer has a lower curvature rate or a larger porosity, or the contained amount of a binder therein is 0.5 times or more. The second active material layer has a plurality of grooves on the surface thereof.

Figure 3

**Description**

TECHNICAL FIELD

The present disclosure relates to an electrode for a secondary battery and a secondary battery using this electrode.

BACKGROUND ART

In recent years, secondary batteries such as lithium-ion batteries are widely used for use requiring a high capacity, such as on-board use and power storage use. The secondary battery has been required to have various performance such as high-speed charge-discharge performance and good cycle characteristics. Since an electrode, which is a main constituent of the secondary battery, significantly affects the performance, there have been many investigations on the electrode. For example, Patent Literature 1 discloses an electrode in which a plurality of grooves is formed on a surface of an active material layer. Patent Literature 1 describes an effect that a secondary battery having excellent permeability of an electrolyte liquid and excellent cycle characteristics and durability may be achieved.

CITATION LIST

PATENT LITERATURE

PATENT LITERATURE 1: International Publication No. WO2008/053880

SUMMARY

It is an important challenge to achieve both the high capacity and the good cycle characteristics in the secondary battery such as the lithium-ion battery. The electrode in Patent Literature 1 is considered to have excellent permeability of the electrolyte liquid to contribute to improvement of the cycle characteristics of the battery. However, the electrode has a problem of supplying of the electrolyte liquid (liquid supplying) in a direction perpendicular to a direction in which the grooves extend, and still has room for improvement of the cycle characteristics.

An electrode for a secondary battery according to the present disclosure is an electrode for a secondary battery comprising: a current collector; and an active material layer formed on the current collector, wherein the active material layer includes: a first active material layer formed on the current collector; and a second active material layer formed above the current collector via the first active material layer, the second active material layer has at least a lower tortuosity, a higher porosity, or an amount of binder contained of greater than or equal to 0.5 times as compared with the first active material layer, and on a surface of the second active material layer, a plurality of grooves is formed.

A secondary battery according to the present disclosure is a secondary battery comprising: an electrode assembly including a positive electrode and a negative electrode; and an electrolyte, wherein the above electrode is applied for at least one of the positive electrode and the negative electrode.

According to the electrode for a secondary battery of the present disclosure, the secondary battery having excellent cycle characteristics may be provided.

BRIEF DESCRIPTION OF DRAWING

FIG. 1 is a sectional view of a secondary battery of an example of an embodiment.
FIG. 2 is a view illustrating an electrode assembly of an example of an embodiment.
FIG. 3 is a sectional view illustrating an example of a negative electrode constituting an electrode assembly.
FIG. 4 is a view for describing a size of concave-convex parts on a negative electrode surface.
FIG. 5 is a sectional view illustrating another example of a negative electrode.

DESCRIPTION OF EMBODIMENTS

As noted above, it is important challenge to achieve both the high capacity and the good cycle characteristics in the secondary battery such as the lithium-ion battery. Forming a plurality of grooves on a surface of an active material layer is effective for increasing liquid supplying of an electrolyte liquid to improve the cycle characteristics while keeping the high capacity, but as a result of investigation by the present inventors, it has been found that a sufficient effect of improving the cycle characteristics cannot be obtained only by forming the grooves. In the secondary battery such as the lithium-ion battery, when the electrolyte liquid is forced out from an inside of the electrode assembly to surroundings thereof due to expansion of the electrode with charge and discharge to decrease the electrolyte liquid in the electrode assembly, which may cause an ununiform battery reaction in the electrode assembly. This ununiform battery reaction is considered to lead to deterioration of the cycle characteristics.

The present inventors have made intensive investigation in view of the above circumstances, and consequently ascertained that the cycle characteristics are remarkably improved by adopting a multilayer structure with different tortuosity or the like in each layer for an active material layer and by forming a plurality of grooves on a surface of the active material layer. For example, in a case of a wound electrode assembly in which a positive electrode and a negative electrode are spirally wound via a separator, forming a plurality of grooves along an axial direction of the electrode assembly increases liquid supplying of the electrolyte liquid in the axial direction of the electrode assembly, but can hardly improve liquid supplying in a winding direction (circumferential direction). According to the electrode of the present disclosure, the liquid supplying may be effectively improved in an entirety of the electrode assembly by a synergistic effect of the active material layer having the multilayer structure and the grooves on the active material layer surface to achieve improvement of the cycle characteristics remarkably beyond the expectation.

Hereinafter, an example of an embodiment of the electrode for a secondary battery according to the present disclosure and a secondary battery using this electrode will be described in detail with reference to the drawings. Note that the scope of the present disclosure includes a configuration composed of selective combination of constituents of a plurality of embodiments and modified examples described hereinafter.

Hereinafter, a cylindrical battery in which a wound electrode assembly 14 is housed in a bottomed cylindrical exterior housing can 16 will be exemplified as the secondary battery, but the exterior of the battery is not limited to the cylindrical exterior housing can. The secondary battery according to the present disclosure may be, for example, a rectangular battery comprising a rectangular exterior hosing can, a coin-shaped battery comprising a coin-shaped exterior housing can, or a laminate battery comprising an exterior composed of a laminate sheet including a metal layer and a resin layer. The electrode assembly is not limited to the wound electrode assembly, and may be a stacked electrode assembly in which a plurality of positive electrodes and a plurality of negative electrodes are alternately stacked via a separator.

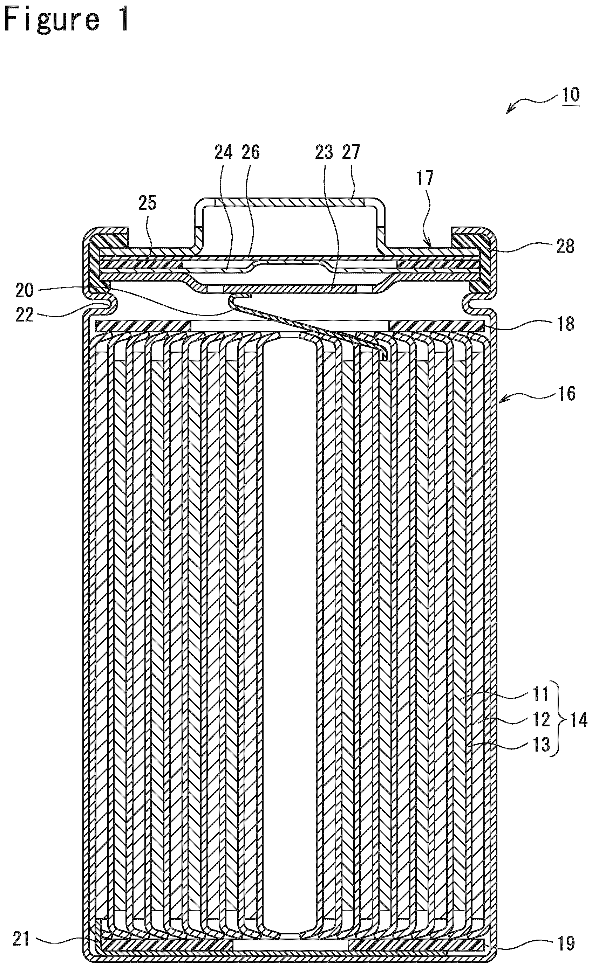

FIG. 1 is a sectional view of a secondary battery 10 of an example of an embodiment. As illustrated in FIG. 1, the secondary battery 10 comprises: an electrode assembly 14 including a positive electrode 11 and a negative electrode 12; an electrolyte; and an exterior housing can 16 housing the electrode assembly 14 and the electrolyte. The electrode according to the present disclosure is applied for at least one of the positive electrode 11 and the negative electrode 12. The electrode assembly 14 has a wound structure in which the positive electrode 11 and the negative electrode 12 are spirally wound via the separator 13. The exterior housing can 16 is a bottomed cylindrical metallic container having an opening on one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The electrolyte may be an aqueous electrolyte; however, use of a non-aqueous electrolyte will be described in the present embodiment. The non-aqueous electrolyte includes a non-aqueous solvent and an electrolyte salt dissolved in the non-aqueous solvent. For the non-aqueous solvent, esters, ethers, nitriles, amides, a mixed solvent of two or more thereof, and the like are used, for example. The non-aqueous solvent may contain a halogen-substituted derivative in which hydrogen of these solvents is at least partially replaced with a halogen atom such as fluorine. An example of the non-aqueous solvent is ethylene carbonate (EC), ethyl methyl carbonate (EMC), dimethyl carbonate (DMC), diethyl carbonate (DEC), a mixed solvent thereof, or the like. For the electrolyte salt, a lithium salt such as $LiPF_6$ is used, for example.

The positive electrode 11, the negative electrode 12, and the separator 13 are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two of the separator 13 are formed to be one size larger than at least the positive electrode 11, and disposed to sandwich the positive electrode 11, for example. The electrode assembly 14 has a positive electrode lead 20 connected to the positive electrode 11 by welding or the like and a negative electrode lead 21 connected to the negative electrode 12 by welding or the like.

The positive electrode 11 has a positive electrode current collector and a positive electrode active material layer formed on the positive electrode current collector. For the positive electrode current collector, a foil of a metal stable within a potential range of the positive electrode 11, such as aluminum and an aluminum alloy, a film in which such a metal is disposed on a surface layer thereof, and the like may be used. The positive electrode active material layer includes a positive electrode active material, a conductive agent, and a binder, and is preferably formed on both surfaces of the positive electrode current collector except for an exposed portion to which a positive electrode lead 20 is to be welded. The positive electrode 11 may be produced by, for example, applying a positive electrode slurry including the positive electrode active material, the conductive agent, the binder, and the like on the positive electrode current collector, and drying and subsequently compressing the coating film to form the positive electrode active material layer on both surfaces of the positive electrode current collector.

The positive electrode active material layer includes lithium-metal composite oxide particles as the positive electrode active material. The lithium-metal composite oxide is a composite oxide containing a metal element such as Co, Mn, Ni, and Al, other than Li. The metal element to constitute the lithium-metal composite oxide is, for example, at least one selected from the group consisting of Mg, Al, Ca, Sc, Ti, V, Cr, Mn, Fe, Co, Ni, Cu, Zn, Ga, Ge, Y, Zr, Sn, Sb, W, Pb, and Bi. Among these, at least one selected from the group consisting of Co, Ni, and Mn is preferably contained. A preferable example of the composite oxide is a lithium-metal composite oxide containing Ni, Co, and Mn, or a lithium-metal composite oxide containing Ni, Co, and Al.

Examples of the conductive agent included in the positive electrode active material layer may include carbon materials such as carbon black such as acetylene black and Ketjenblack, graphite, carbon nanotube (CNT), carbon nanofiber, and graphene. Examples of the binder included in the positive electrode active material layer may include fluorine-containing resins such as polytetrafluoroethylene (PTFE) and polyvinylidene fluoride (PVDF), polyacrylonitrile (PAN), a polyimide, an acrylic resin, and a polyolefin. With these resins, carboxymethylcellulose (CMC) or a salt thereof, polyethylene oxide (PEO), and the like may be used in combination.

The negative electrode 12 has a negative electrode current collector and a negative electrode active material layer formed on the negative electrode current collector. For the negative electrode current collector, a foil of a metal stable within a potential range of the negative electrode 12, such as copper and a copper alloy, a film in which such a metal is disposed on a surface layer thereof, and the like may be used. The negative electrode active material layer includes a negative electrode active material, a binder, and as necessary a conductive agent, and is preferably provided on both surfaces of the negative electrode current collector except for an exposed portion to which a negative electrode lead 21 is to be welded. The negative electrode 12 may be produced by applying a negative electrode slurry including the negative electrode active material, the binder, and the like on a surface of the negative electrode current collector, and drying and subsequently compressing the coating film to form the negative electrode active material layer on both surfaces of the negative electrode current collector.

For the binder included in the negative electrode active material layer, a fluororesin, PAN, a polyimide, an acrylic resin, a polyolefin, and the like may be used as in the case of the positive electrode 11, but styrene-butadiene rubber (SBR) is preferably used. The negative electrode active material layer preferably includes CMC or a salt thereof, polyacrylic acid (PAA) or a salt thereof, polyvinyl alcohol (PVA), and the like. Among these, SBR; and CMC or a salt thereof, or PAA or a salt thereof are preferably used in combination. The negative electrode active material layer may include a conductive agent such as CNT.

For the separator 13, a porous sheet having an ion permeation property and an insulation property is used. Specific examples of the porous sheet include a fine porous thin film, a woven fabric, and a nonwoven fabric. As a material of the separator 13, a polyolefin such as polyethylene and polypropylene, cellulose, and the like are preferable. The separator 13 may have a single-layer structure or a multilayer structure. On a surface of the separator 13, a resin layer having high heat resistance, such as an aramid resin, may be formed.

The electrode assembly 14 may have an inorganic filler layer formed on an interface between the separator 13 and at least one of the positive electrode 11 and the negative electrode 12. Examples of the inorganic filler include an oxide, a phosphate compound, and the like that contain metal elements such as Ti, Al, Si, and Mg. The filler layer may be formed by applying a slurry containing the filler on the surface of the positive electrode 11, the negative electrode 12, or the separator 13.

Insulating plates 18 and 19 are disposed on the upper and lower sides of the electrode assembly 14, respectively. In the example illustrated in FIG. 1, the positive electrode lead 20 extends through a through hole of the insulating plate 18 toward the sealing assembly 17 side, and the negative electrode lead 21 extends through an outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between each of the circumferential parts. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

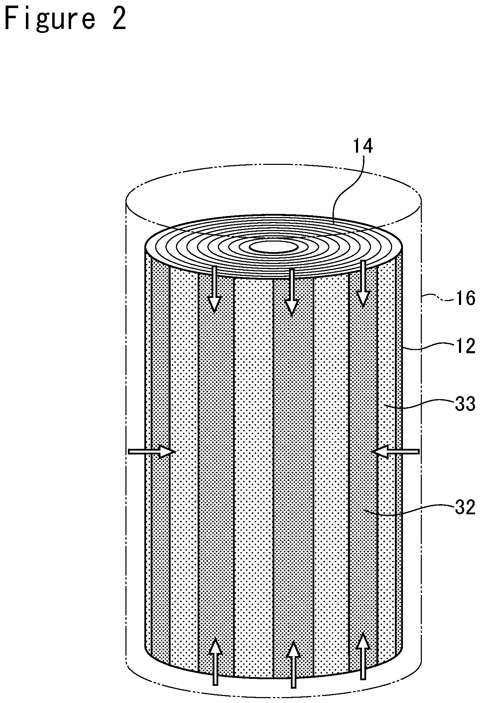

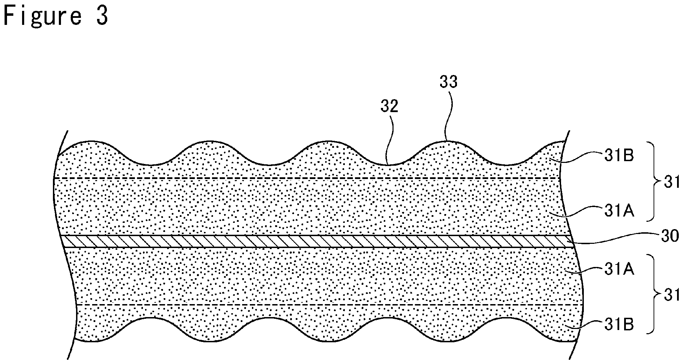

Hereinafter, the negative electrode 12 will be described in detail with reference to FIG. 2 to FIG.4. FIG. 2 is a view illustrating the electrode assembly 14, and FIG. 3 is a sectional view in which the negative electrode 12 is cut in a longitudinal direction.

In the present embodiment, the constitution of the electrode according to the present disclosure applied for the negative electrode 12 will be described; however, the constitution of the electrode according to the present disclosure may be applied for the positive electrode 11, or may be applied for both the positive electrode 11 and the negative electrode 12. The constitution of the electrode according to the present disclosure is preferably applied for at least the negative electrode 12, and the effect of improving the cycle characteristics of the battery becomes more remarkable when applied for the negative electrode 12. Particularly, when a Si-containing material is used as the negative electrode active material, change in volume of the negative electrode 12 with charge and discharge becomes large to increase an amount of the electrolyte liquid forced out from an inside of the electrode assembly 14 to surroundings thereof, and therefore it is important to increase a function of returning the electrolyte liquid to the inside of the electrode assembly 14 (liquid supplying).

In the example illustrated in FIG. 2, the negative electrode 12 is disposed on the outermost circumferential surface of the electrode assembly 14. On a surface of the negative electrode active material layer 31, a plurality of grooves 32 is formed. As noted above, the electrode assembly 14 has the wound structure in which the positive electrode 11 and the negative electrode 12 are wound via the separator 13, and the plurality of the grooves 32 is formed along an axial direction of the electrode assembly 14. The plurality of the grooves 32 extends in the axial direction (first direction) of the electrode assembly 14 at an interval with each other, and for example, formed in parallel to each other over an entire length of the axial direction of the electrode assembly 14.

On the surface of the negative electrode active material layer 31, the plurality of the grooves 32 and regions 33 where the groove 32 is not formed are repeated to form concave-convex parts along a winding direction (second direction) perpendicular to the axial direction of the electrode assembly 14. The region 33 is a band-shaped region viewed as a concave shape raised with sandwiched by two of the grooves 32. The plurality of the grooves 32 is formed in the winding direction of the electrode assembly 14, in other words the longitudinal direction of the negative electrode 12, with a substantially equal pitch, and the regular concave-convex parts are formed on the surface of the negative electrode active material layer 31. Although a detail will be described later, an average value of the pitches of the concave-convex parts is preferably less than or equal to 250 $\mu$m, and a standard deviation of the pitches of the concave-convex parts is preferably less than or equal to 15 $\mu$m.

As illustrated in FIG. 3, the negative electrode active material layer 31 has a multilayer structure, and includes: a first active material layer 31A formed on the negative electrode current collector 30; and a second active material layer 31B formed above the negative electrode current collector 30 via the first active material layer 31A. The second active material layer 31B forms the outermost surface of the negative electrode active material layer 31. Thus, the plurality of the grooves 32 is formed on the surface of the second active material layer 31B. The second active material layer 31B has at least a lower tortuosity, a higher porosity, or an amount of binder contained of greater than or equal to 0.5 times as compared with the first active material layer 31A. That is, the active material layers have at least one selected from the group consisting of the tortuosity, the porosity, and the amount of binder contained different from each other. The multilayer structure is preferably applied for the active material layers disposed on both the surfaces of the negative electrode current collector 30.

The negative electrode active material layer 31 preferably includes a Si-containing material as the negative electrode active material. Since the Si-containing material has a higher theoretical capacity density than graphite, use as the negative electrode active material may attempt to increase the capacity of the battery. Meanwhile, since the Si-containing material causes large change in volume with charge and discharge, use of the Si-containing material tends to deteriorate the cycle characteristics. However, applying the constitution of the electrode according to the present disclosure to the negative electrode 12 may effectively improve the cycle characteristics. The constitution of the electrode according to the present disclosure is more preferable when the Si-containing material is used as the negative electrode active material.

In the negative electrode active material layer 31, the Si-containing material and graphite are more preferably used in combination as the negative electrode active material. In this case, the high capacity and the good cycle characteristics may be more highly achieved. A content of the Si-containing material is preferably greater than or equal to 1 mass%, more preferably greater than or equal to 3 mass%, and particularly preferably greater than or equal to 5 mass% relative to a mass of the negative electrode active material. An upper limit of the content of the Si-containing material is not particularly limited, and an example thereof is 25 mass% or 20 mass%. In the present embodiment, the Si-containing material and graphite are included in the first active material layer 31A and the second active material layer 31B.

The graphite may be any of artificial graphite such as massive artificial graphite (MAG) and graphitized mesophase-carbon microbead (MCMB); and natural graphite such as flake graphite, massive graphite, and amorphous graphite. The graphite is, for example, at least one selected from the group consisting of the artificial graphite and the natural graphite. The first active material layer 31A and the second active material layer 31B may include the same type of the graphite, or may include different graphite. For example, regulating the type and blending ratio of the graphite added into the first active material layer 31A and the second active material layer 31B may control the tortuosity ratio of the active material layers to be the target value.

A median diameter (D50) on a volumetric basis of the graphite is, for example, greater than or equal to 1 $\mu$m and less than or equal to 30 $\mu$m, and preferably greater than or equal to 5 $\mu$m and less than or equal to 25 $\mu$m. The D50 means a particle diameter at which a cumulative frequency is 50% from a smaller particle diameter side in a particle size distribution on a volumetric basis. The particle size distribution of the negative electrode active material may be measured by using a laser diffraction-type particle size distribution measuring device (for example, MT3000II, manufactured by MicrotracBEL Corp.) with water as a dispersion medium.

The Si-containing material may be any as long as it is a material containing Si, and an example thereof includes a silicon alloy, a silicon compound, and a composite material containing Si. The preferable composite material is composite particles including an ion-conductive layer and Si particles dispersed in the ion-conductive layer. On surfaces of the composite particles containing Si, a conductive layer may be formed. The ion-conductive layer is, for example, at least one selected from the group consisting of a silicon oxide phase, a silicate phase, and a carbon phase. The ion-conductive layer is a matrix phase constituted with aggregation of particles finer than the Si particles. The first active material layer 31A and the second active material layer 31B may include the same type of the Si-containing material, or may include different Si-containing materials.

An example of the Si-containing material is composite particles having a sea-island structure in which fine Si particles are substantially uniformly dispersed in an amorphous silicon oxide phase, and represented by the general formula $SiO_x$ (0<x≤2). The main component of the silicon oxide may be silicon dioxide. The content rate "x" of oxygen relative to silicon is, for example, 0.5≤x<2.0, and preferably 0.8≤x≤1.5. D50 of the composite particles is typically smaller than the D50 of the graphite. The D50 of the composite particles is, for example, greater than or equal to 1 $\mu$m and less than or equal to 15 $\mu$m.

Another example of the Si-containing material is composite particles having a sea-island structure in which fine Si particles are substantially uniformly dispersed in the silicate phase or the carbon phase. The silicate phase includes, for example, at least one selected from the group consisting of alkali metal elements and group II elements of the periodic table. The silicate phase may include at least one selected from the group consisting of B, Al, Zr, Nb, Ta, V, Y, Ti, P, Bi, Zn, Sn, Pb, Sb, Co, Er, F, W, and lanthanoids. The carbon phase may be a phase of amorphous carbon. The amorphous carbon is a carbon material having an average face spacing of a (002) face measured by X-ray diffraction of more than 0.34 nm.

The preferable silicate phase is a lithium silicate phase containing Li. When the composite particles including the lithium silicate phase is used, an irreversible capacity is reduced to obtain good initial charge-discharge efficiency. The lithium silicate phase is, for example, a phase of a composite oxide represented by the general formula $Li_{2z}SiO_{(2+z)}$ (0<z<2). The lithium silicate phase preferably does not include $Li_4SiO_4$ (Z=2). $Li_4SiO_4$, which is an unstable compound, reacts with water and exhibits alkalinity, and therefore may modify Si, resulting in deterioration of the charge-discharge capacity. The lithium silicate phase preferably contains $Li_2SiO_3$ (Z=1) or $Li_2Si_2O_5$ (Z=1/2) as a main component from the viewpoints of stability, productivity, Li-ion conductivity, and the like.

The conductive layer formed on the surfaces of the composite particles is, for example, a carbon coating composed of a conductive carbon material. For the conductive carbon material, carbon black such as acetylene black and Ketjenblack, graphite, amorphous carbon with low crystallinity, and the like may be used. A thickness of the conductive layer is preferably greater than or equal to 1 nm and less than or equal to 200 nm, or greater than or equal to 5 nm and less than or equal to 100 nm with considering achievement of the conductivity and diffusibility of lithium ions toward particle insides. A thickness of the conductive layer may be measured by sectional observation of the composite particles using a scanning electron microscope (SEM) or a transmission electron microscope (TEM).

The negative electrode active material layer 31 may include a conductive agent. For the conductive agent, a carbon material other than the graphite used as the negative electrode active material is used, for example. Adding the conductive agent in the negative electrode active material layer 31 may inhibit generation of active material particles isolated from a conductive path, and the effect of improving the battery characteristics such as the high-rate characteristics and cycle characteristics becomes more remarkable. A content of the conductive agent is preferably greater than or equal to 0.01 mass% and less than or equal to 5 mass%, and more preferably greater than or equal to 0.01 mass% and less than or equal to 3 mass% relative to the mass of the negative electrode active material layer 31. The first active material layer 31A and the second active material layer 31B may include the same type of the carbon material, or may include different types of the carbon material as the conductive agent.

The conductive agent included in the negative electrode active material layer 31 may be any of a particle carbon material such as carbon black and a fiber carbon material such as carbon nanotube (CNT), or the particle carbon material and the fiber carbon material may be used in combination. Among these, CNT is preferably used. Since CNT can exhibit good conductivity with addition at a small amount, CNT contributes to increase in the capacity of the battery, and also contributes to improvement of the high-rate characteristics.

CNT may be any of single-wall CNT (SWCNT) and multiwall CNT (MWCNT). For MWCNT, CNT with a tubular structure in which graphene sheets composed of six-membered carbon rings are wound parallel to the fiber axis, CNT with a platelet structure in which graphene sheets composed of six-membered carbon rings are arranged perpendicular to the fiber axis, CNT with a herringbone structure in which graphene sheets composed of six-membered carbon rings are wound with an oblique angle to the fiber axis, and the like may be used, for example.

The first active material layer 31A and the second active material layer 31B are preferably layers having a tortuosity different from each other, and a tortuosity $\tau_2$ of the second active material layer 31B is preferably smaller than a tortuosity $\tau_1$ of the first active material layer 31A. The relationship between the multilayer structure of the negative electrode active material layer 31 and the tortuosity is important for improving the cycle characteristics, and setting a ratio $(\tau_2/\tau_1)$ of the tortuosities of the layers to be less than 1 may remarkably improve the permeability of the electrolyte liquid into the negative electrode active material layer 31. The permeability of the electrolyte liquid into the negative electrode active material layer 31 also changes depending on the porosity or the amount of binder contained in the active material layers. It is also acceptable that the active material layers have substantially equal tortuosity and at least one of the porosity and the amount of binder different from each other.

Although the negative electrode active material layer 31 preferably has the bilayer structure composed of the first active material layer 31A and the second active material layer 31B, the negative electrode active material layer 31 may have a third active material layer within a range not impairing the object of the present disclosure. In addition, a layer other than the active material layers may be formed on/above the negative electrode current collector 30. An example of the other layer is a protective layer including an inorganic filler, a conductive agent, and a binder

The tortuosity $\tau$ of the negative electrode active material layer 31 herein is calculated with the following formula. "f" represents a pathway length though which Medial Axis penetrating faces opposite to each other in the thickness direction (hereinafter, abbreviated as "pathway length"), and "s" represents a length of a straight line between a start point and an end point of each pathway (hereinafter, abbreviated as "linear distance of end-start points"). Used for "f" and "s" are average values of the pathway length and the linear distance determined on a plurality of pathways. The tortuosity is evaluated by using the negative electrode 12 in a fully discharged state.

$$\tau = f/s$$

The tortuosity of the first active material layer 31A and the second active material layer 31B may be calculated with the following formulae.

$$\tau_1 = f_1/s_1$$

(fi: a pathway length in the first active material layer; si: a linear distance of end-start points in the first active material layer)

$$\tau_2 = f_2/s_2$$

($f_2$: a pathway length in the second active material layer; $s_2$: a linear distance of end-start points in the second active material layer)

The pathway length and the linear distance are determined by sectional observation and image analysis of the active material layer using a 3D scanning electron microscope (3DSEM, for example Ethos NX-5000, manufactured by Hitachi High-Tech Corporation).

The specific calculation method of the tortuosity is as follows.

(1) Construction of Three-Dimensional Structure of Negative Electrode Active Material Layer 31

The negative electrode active material layer 31 is placed on a sample table of the 3DSEM to alternately perform continuous sectional slicing and sectional observation. The observation is performed at an acceleration voltage of 5 kV. The obtained two-dimensional continuous images are subjected to an image binarization process with a three-dimensional image analysis software (for example, EX FACT VR, manufactured by Nihon Visual Science, Inc.), and these images are combined to construct a three-dimensional structure. A size of the three-dimensional structure is preferably greater than or equal to 100 $\mu$m $\times$ 100 $\mu$m $\times$ 100 $\mu$m.

(2) Determination of Boundary between First Active Material Layer 31A and Second Active Material Layer 31B

From the three-dimensional structure image obtained in the (1), a boundary of regions with different spaces in the thickness direction is determined as a boundary line between the first active material layer 31A and the second active material layer 31B.

(3) Determination of Pathway Lengths (f, $f_1$, and $f_2$)

The image of the three-dimensional structure obtained in the (1) was divided into the first active material layer 31A and the second active material layer 31B with the boundary line determined in the (2), and the space extracted by the binarization is thinned to determine an axis passing through a center of the space (Medeial Axis). The Medial Axis present in a cube and penetrating the surface of the negative electrode current collector 30 in the vertical direction was extracted, and the shortest pathway of one branched pathway was determined as the pathway length.

(4) Calculation of Tortuosity ($\tau$, $\tau_1$, and $\tau_2$)

An average value of the pathway lengths determined in the (3) and an average value of the linear distances between start and end points of each pathway are used to calculate the tortuosity of the active material layer with the formulae.

The ratio ($\tau_2/\tau_1$) of the tortuosity $\tau_2$ of the second active material layer 31B to the tortuosity $\tau_1$ of the first active material layer 31A is preferably greater than or equal to 0.3, and more preferably greater than or equal to 0.5. An example of the preferable range of the ratio ($\tau_2/\tau_1$) of the tortuosity is $0.3 \leq (\tau_2/\tau_1) < 1.0$, more preferably $0.5 \leq (\tau_2/\tau_1) < 1.0$, and particularly preferably $0.5 \leq (\tau_2/\tau_1) < 0.98$. When the tortuosity ratio ($\tau_2/\tau_1$) satisfies this relationship, the permeability of the electrolyte liquid into the negative electrode active material layer 31 is improved, and the effect of improving the cycle characteristics becomes more remarkable. The tortuosity $\tau$ of the negative electrode active material layer 31 is not particularly limited, and an example thereof is greater than or equal to 1.5 and less than or equal to 5.0, and preferably greater than or equal to 2.0 and less than or equal to 3.5.

The thickness of the negative electrode active material layer 31 is, for example, greater than or equal to 60 $\mu$m and less than or equal to 150 $\mu$m, and preferably greater than or equal to 70 $\mu$m and less than or equal to 120 $\mu$m on one side of the negative electrode current collector 30. The thickness of the active material layer is determined by sectional observation of the active material layer using an SEM. The thickness of each of the active material layers is substantially uniform, and means herein an average value of the thicknesses.

As for thicknesses of the first active material layer 31A and the second active material layer 31B, the thickness of the second active material layer 31B may be larger than the thickness of the first active material layer 31A, but the thickness of the second active material layer 31B is preferably equal to the thickness of the first active material layer 31A or smaller than the thickness of the first active material layer 31A. The thickness of the first active material layer 31A is preferably greater than or equal to 50% and less than or equal to 80%, and may be greater than or equal to 60% and less than or equal to 80% of the thickness of the negative electrode active material layer 31. The thickness of the second active material layer 31B is preferably greater than or equal to 20% and less than or equal to 50%, and may be greater than or equal to 20% and less than or equal to 40% of the thickness of the negative electrode active material layer 31. The thicknesses of the active material layers being within the above ranges may more highly achieve both the high capacity and the good cycle characteristics.

A filling density of the negative electrode active material layer 31 is, for example, greater than or equal to 1.2 g/cc, and preferably greater than or equal to 1.3. An upper limit of the filling density of the negative electrode active material layer 31 is not particularly limited, and an example thereof is 1.7 g/cc. The filling density of the negative electrode active material layer 31 within the above range can achieve the secondary battery 10 having a high energy density. The filling densities of the first active material layer 31A and the second active material layer 31B are not particularly limited and may be any as long as the filling density is within the above range as an entirety of the negative electrode active material layer 31, but the filling density of the first active material layer 31A is typically larger than the filling density of the second active material layer 31B.

Constitution materials of the first active material layer 31A and the second active material layer 31B may be the same as or different from each other as long as the ratio of the tortuosity ($\tau_2/\tau_1$) can be controlled within the target range. For example, changing a compressive force in a rolling step of each of the active material layers can control the ratio of the tortuosity ($\tau_2/\tau_1$) within the target range. Specifically, the first active material layer 31A is formed on the surface of the negative electrode current collector 30, a first rolling step is performed, then the second active material layer 31B is formed on the first active material layer 31A, and a second rolling step is performed. In this case, a compressive force in the second rolling step is set to be smaller than a compressive force in the first rolling step.

Examples of a method for controlling the ratio of the tortuosity ($\tau_2/\tau_1$) within the target range include: a method of changing the compressive force in the rolling step of each of the active material layers; and separately thereto or in addition thereto, a method of changing at least one of the type and blending ratio of the negative electrode active material in each of the active material layers. For example, artificial graphite may be added into one of the first active material layer 31A and the second active material layer 31B, and natural graphite may be added into the other. Alternatively, artificial graphite and natural graphite may be added into each of the active material layers, and the blending ratios thereof may be changed in each of the active material layers. The ratio of the tortuosity ($\tau_2/\tau_1$) may also be controlled within the target range by regulating a blending ratio of two types of graphite having different D50.

A ratio of the porosity between the first active material layer 31A and the second active material layer 31B may be 1:1, or the porosity of the first active material layer 31A may be larger than the porosity of the second active material layer 31B, but the porosity of the first active material layer 31A is preferably smaller than the porosity of the second active material layer 31B. The porosity of the first active material layer 31A is preferably greater than or equal to 10% and less than or equal to 40%, and more preferably greater than or equal to 20% and less than or equal to 30%. The porosity of the second active material layer 31B is preferably greater than or equal to 20% and less than or equal to 50%, and more preferably greater than or equal to 30% and less than or equal to 40%. When the porosity of each of the active material layers is within the above ranges, the effect of improving the cycle characteristics becomes more remarkable.

The porosity of each of the active material layers means a proportion of gaps in a cross section of the active material layer, and calculated from an SEM image of the negative electrode cross section. The porosity of each of the active material layers is calculated by extracting a region of the gaps with a binarization treatment of the SEM image of the cross section of the active material layer by using an image analysis software (Image-Pro Premier, manufactured by MEDIA CYBERNETICS), and dividing a total area of the gaps by a total area of the cross section of each of the active material layers.

An amount $b_2$ of binder contained in the second active material layer 31B is preferably greater than or equal to 0.5 times larger than an amount $b_1$ of binder contained in the first active material layer 31A. Reducing the amount of binder typically tends to increase the porosity, but the plurality of the grooves 32 is formed on the surface of the second active material layer 31B, and thus an appropriate amount of binder is required to keep the good layer structure over a long term. It is more preferable that the amount $b_2$ of binder in the second active material layer 31B is set to be larger than the amount $b_1$ of binder in the first active material layer 31A.

A ratio ($b_2/b_1$) of the amount $b_2$ of binder in the second active material layer 31B relative to the amount $b_1$ of binder in the first active material layer 31A preferably satisfies $1.0<(b_2/b_1)\leq1.5$. In this case, stability of the layer structure may be increased while keeping the good liquid supplying, and the effect of improving the cycle characteristics becomes more remarkable. If the ratio ($b_2/b_1$) of the amounts of binder of each of the active material layers is more than 1.5, for example, permeability of the electrolyte liquid into the negative electrode active material layer 31 is deteriorated, which may deteriorate the cycle characteristics compared with the case where the ratio ($b_2/b_1$) of the amounts of binder is less than or equal to 1.5. The amount of binder is regulated within a range of, for example, greater than or equal to 0.05 mass% and less than or equal to 5 mass%, or greater than or equal to 0.1 mass% and less than or equal to 3 mass% relative to the mass of the negative electrode active material layer 31.

The amount of binder in each of the active material layers herein means a total amount of materials that can function as the binder. Specifically, when CMC or a salt thereof, PAA or a salt thereof, or the like is used in combination in addition to SBR, which is the main binder, masses of these components used in combination are also considered. That is, when the active material layer includes SBR, CMC or a salt thereof, and PAA or a salt thereof, a total of the masses thereof is the amount of binder in each of the active material layers.

As exemplified in FIG. 2 and FIG. 3, the plurality of the grooves 32 is formed in a stripe shape on the surface of the negative electrode active material layer 31 (second active material layer 31B). Each of the grooves 32 is formed over an entire length in the axial direction of the electrode assembly 14, in other words, over an entire length in the width direction of the negative electrode 12. The grooves 32 preferably have substantially equal widths and depths, and preferably formed in the winding direction of the electrode assembly 14 (the length direction of the negative electrode 12) at substantially equal intervals. On the surface of the second active material layer 31B, the grooves 32 and the regions 33 are alternately repeated along the length direction of the negative electrode 12 to form the regular concave-convex parts. The grooves 32 are formed from one end to the other end in the length direction of the negative electrode active material layer 31 with a constant pitch, for example.

In the example illustrated in FIG. 3, the surface of the region 33 sandwiched by two of the grooves 32 is curved so as to form a convex part toward a direction opposite to the negative electrode current collector 30. On the other hand, a bottom face of the groove 32 is curved so as to form a convex part toward a direction of the negative electrode current collector 30. The plurality of the grooves 32 is formed only within a range of the second active material layer 31B. Although a detail will be described later, the plurality of the grooves 32 is formed by imprinting, which is a process of compressing the negative electrode active material layer 31 by using a roller on which projections are formed on the surface.

The plurality of the grooves 32 is preferably formed on each of the active material layers disposed on both the surfaces of the negative electrode current collector 30. A number of the grooves 32 formed on the surface of each of the second active material layers 31B is equal, and each of the grooves 32 may be formed so as to be overlapped in the thickness direction of the negative electrode 12. Each of the grooves 32 may be slanted relative to the axial direction of the negative electrode 12, but preferably formed in substantially parallel to the width direction. In the present embodiment, there is no significant difference in density in the entire region of the second active material layer 31B. In this case, uneven battery reactions caused by the difference in density may be inhibited to increase the effect of improving the cycle characteristics.

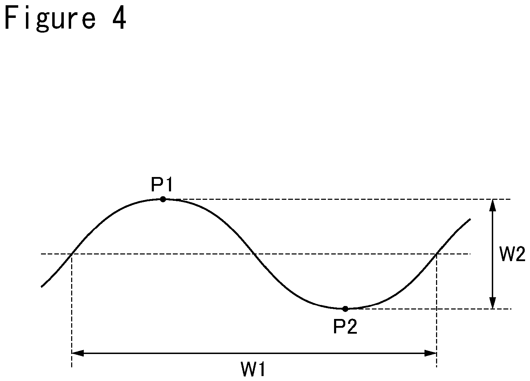

FIG. 4 is a view for describing the size of the regular concave-convex parts formed on the surface of the second active material layer 31B. An average value of pitches W1 of the concave-convex parts is preferably less than or equal to 250 $\mu$m. A standard deviation of the pitches W1 of the concave-convex parts is preferably less than or equal to 20 $\mu$m, and more preferably less than or equal to 15 $\mu$m. The pitch W1 of the concave-convex parts means a formation interval of the concave-convex parts including each one of the groove 32 and the region 33 (interval in the length direction of the negative electrode 12). The pitch W1 of the concave-convex parts is, for example, an interval between deepest positions P2 in the grooves 32 adjacent to each other or an interval between tops P1 in the regions 33 adjacent to each other.

Forming the regular concave-convex parts (grooves 32) with the average value of the pitches W1 of less than or equal to 250 $\mu$m and the standard deviation of less than or equal to 15 $\mu$m within a wide region of the second active material layer 31B uniformizes permeability of the electrolyte liquid in the entire region of the negative electrode active material layer 31, and the effect of improving the cycle characteristics becomes more remarkable. An example of a preferable range of the average value of the pitches W1 of the concave-convex parts is greater than or equal to 100 $\mu$m and less than or equal to 250 $\mu$m, and more preferably greater than or equal to 100 $\mu$m and less than or equal to 200 $\mu$m. In this case, the effect of improving the cycle characteristics becomes more remarkable compared with a case where the average value of the pitches W1 is out of the above range.

An average value of heights W2 of the concave-convex parts is preferably greater than or equal to 5 $\mu$m, and may be greater than or equal to 10 $\mu$m. The height W2 of the concave-convex parts means a length from the bottom of the groove 32 to the top of the region 33, which are adjacent to each other, and means a length from a deepest position P2 to a top P1 along the thickness direction of the negative electrode active material layer 31. An example of a preferable range of the average value of the heights W2 is greater than or equal to 5 $\mu$m and less than or equal to 20 $\mu$m, and more preferably greater than or equal to 8 $\mu$m and less than or equal to 15 $\mu$m. In this case, the effect of improving the cycle characteristics becomes more remarkable compared with a case where the average value of the heights W2 is out of the above range. The height W2 of the concave-convex parts may be greater than or equal to 5 $\mu$m, or may be greater than or equal to 10 $\mu$m in all the concave-convex parts.

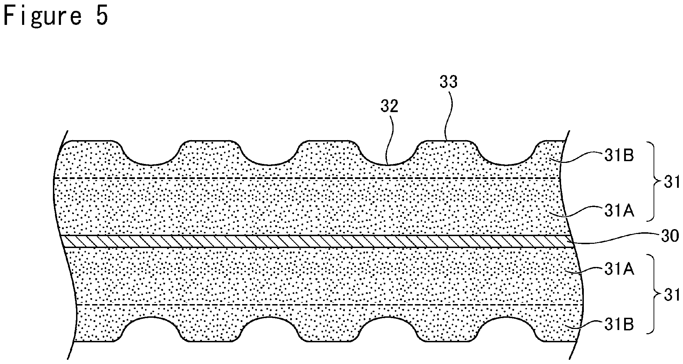

FIG. 5 is a view illustrating a modified example of the concave-convex shape on the negative electrode surface. As illustrated in FIG. 5, a substantially flat portion may be present on the surface of the region 33. The bottom of the groove 32 is curved similarly to the example illustrated in FIG. 3. On the surface of the second active material layer 31B, when a portion lowered toward a side of the negative electrode current collector 30 from the substantially flat portion in the region 33 is defined as the groove 32, a width of the groove 32 along the length direction of the negative electrode 12 and a width of the region other than the groove 32 (width of the portion with the flat surface of the region 33) may be substantially equal, or the width of the groove 32 may be narrower. An example of the width of the groove 32 is greater than or equal to 50 $\mu$m and less than or equal to 100 $\mu$m.

The plurality of the grooves 32 is formed by, for example, imprinting, which is a process of compressing the negative electrode active material layer 31 with a pressing member such as a roller having no concave-convex parts on the surface, and then compressing again the negative electrode active material layer 31 by using a roller having projections on the surface. The projections formed on the roller are slenderly formed in a direction perpendicular to a direction in which the projections are arranged at substantially constant intervals. On the surface of the negative electrode active material layer 31 (second active material layer 31B), the groove 32 is to be formed at a portion where this projection is contacted. Accordingly, the pitch W1, the height W2, and the like of the above concave-convex parts may be controlled to the target values by changing the size, the interval, and the like of the projections. In addition, the concave-convex shape exemplified in FIG. 3 and the concave-convex shape exemplified in FIG. 5 may be formed by changing the shape on the roller surface including the projections.

EXAMPLES

Hereinafter, the present disclosure will be further described with Examples, but the present disclosure is not limited to these Examples.

<Experimental example 1>

[Production of Positive Electrode]

As a positive electrode active material, a lithium-transition metal composite oxide represented by the general formula $LiNi_{0.82}Co_{0.15}Al_{0.03}O_2$ was used. The positive electrode active material, acetylene black, and polyvinylidene fluoride were mixed at a solid-content mass ratio of 98:1:1, and N-methyl-2-pyrrolidone (NMP) was used as a dispersion medium to prepare a positive electrode slurry. Then, the positive electrode slurry was applied on both surfaces of a positive electrode current collector composed of aluminum foil, and the coating film was dried and compressed by using a roller. Thereafter, the positive electrode current collector was cut to a predetermined electrode size to obtain a positive electrode in which a positive electrode active material layer was formed on both surfaces of the positive electrode current collector.

[Production of Negative Electrode]

As a negative electrode active material, a mixture in which graphite and a Si-containing material represented by SiOx (X=1) were mixed at a mass ratio of 90:10 was used. For the graphite, a mixture of natural graphite and artificial graphite was used. The negative electrode active material, a dispersion of styrene-butadiene rubber (SBR), a sodium salt of carboxymethylcellulose (CMC-Na), and polyacrylic acid (PAA) were mixed at a solid-content mass ratio of 100: 1.0: 1.0:0.9, and water as a dispersion medium was used to prepare a first negative electrode slurry. Similarly, the negative electrode active material, SBR, CMC-Na, and PAA were mixed at a solid-content mass ratio of 100:1.5:1.0:1.0 to prepare a second negative electrode slurry.

A ratio ($b_2/b_1$) of a total amount ($b_2$) of SBR, CMC-Na, and PAA in the second slurry relative to a total amount ($b_1$) of SBR, CMC-Na, and PAA in the first slurry was 1.2. In the two types of the slurry, the blending ratios of the natural graphite and the artificial graphite were different from each other.

Then, the first negative electrode slurry was applied on both surfaces of the negative electrode current collector composed of copper foil, the first coating film was dried, and then the first film was compressed by using a roller. Subsequently, the second negative electrode slurry was applied on the first coating film to form a second coating film, the second coating film was dried, and then the first and second coating films were compressed by using a roller. So that a thickness, a tortuosity, and a porosity of a first active material layer composed of the first coating film and a second active material layer composed of the second coating film were the following values, the blending ratio between the natural graphite and the artificial graphite in each of the slurries, the amount of each of the slurries applied, and the compressive force for each of the coating films were regulated. A thickness of the negative electrode active material layer was 85 $\mu$m on one side of the current collector, and the density was 1.6 g/cc.

Tortuosity $\tau_1$ of first active material layer: 3.2
Tortuosity $\tau_2$ of second active material layer: 2.6
Tortuosity ratio ($\tau_2/\tau_1$): 0.81
Thickness ratio between first active material layer and second active material layer = 75:25
Porosity of first active material layer: 0.32
Porosity of second active material layer: 0.22

Then, the negative electrode active material layer was compressed by using a roller having a plurality of projections to form a plurality of grooves parallel to each other over an entire width of a negative electrode at a substantially equal intervals on the surface of the second active material layer. A concave-convex shape formed on the surface of the second active material layer was similar to the concave-convex shape illustrated in FIG. 5. An average value of pitches W1 (interval between deepest positions of the grooves) of the concave-convex parts was 200 $\mu$m, a standard deviation $\sigma$(W1) of the pitches W1 was 15 $\mu$m, and an average value of heights W2 of the concave-convex parts (length along a thickness direction of the negative electrode active material layer from the deepest position of the groove and a top of the region) was 10 $\mu$m. Thereafter, the negative electrode current collector was cut to a predetermined electrode size to obtain a negative electrode in which a plurality of the grooves were regularly formed on the surface of each of the active material layers.

[Preparation of Non-Aqueous Electrolyte Liquid]

Ethylene carbonate and diethyl carbonate were mixed at a volume ratio (25°C) of 1: 1, and then $LiPF_6$ was added into this mixed solvent so that the concentration was 1 mol/L to obtain a non-aqueous electrolyte liquid.

[Production of Test Cell (Non-Aqueous Electrolyte Secondary Battery)]

The above positive electrode to which a lead made of aluminum was welded and the above negative electrode to which a lead made of nickel was welded were spirally wound via a separator to produce a wound electrode assembly. This electrode assembly was housed in a bottomed cylindrical exterior housing can. The above non-aqueous electrolyte liquid was injected, and then an opening of the exterior housing can was sealed with a sealing assembly via a gasket to obtain a test cell A1.

<Comparative Example 1>

A test cell B1 was produced in the same manner as in Example 1 except that, in the production of the negative electrode, the groove was not formed on the surface of the second active material layer.

<Example 2>

A test cell A2 was produced in the same manner as in Example 1 except that, in the production of the negative electrode, the ratio of the thicknesses of the first and second active material layers was changed to 50:50.

<Examples 3 to 15>

Test cells A3 to A15 were produced in the same manner as in Example 2 except that, in the production of the negative electrode, the slurries were prepared and the roller for processing the grooves was changed so that the ratio $(b_2/b_1)$ of the amounts of binder in the first and second active material layers and the size and the pitch (W1, $\sigma$(W1), W2) of the grooves formed on the surface of the second active material layer were values described in Table 2-1.

<Comparative Example 2>

A test cell B2 was produced in the same manner as in Comparative Example 1 except that, in the production of the negative electrode, the ratio of the thicknesses of the first and second active material layers was changed to 50:50.

<Comparative Example 3>

A test cell B3 was produced in the same manner as in Example 2 except that, in the production of the negative electrode, the negative electrode active material layer was changed to have a single-layer structure.

<Comparative Example 4>

A test cell B4 was produced in the same manner as in Comparative Example 3 except that, in the production of the negative electrode, the groove was not formed on the surface of the second active material layer.

Cycle characteristics of each of the batteries of Examples and Comparative Examples were evaluated. The evaluation results are shown in Table 1, Table 2-1, and Table 2-2.

[Evaluation of Cycle Characteristics]

Under a temperature environment of 25°C, the evaluation target battery was charged at a constant current of 0.7 C until a cell voltage reached 4.2 V, and then discharged at constant current of 0.5 C until the cell voltage reached 2.75 V. This charge-discharge cycle was repeated to determine a number of cycles with which the discharge capacity reached 80% of the discharge capacity at the 1st cycle.

[Table 1]

|  | | Negative electrode | | | | | Evaluation of battery performance |
| --- | --- | --- | --- | --- | --- | --- | --- |
|  | Groove processing | Layer structure | b2/b1 | W1 | $\sigma$(W1) | W2 | Number of cycles |
| A1 | Presence | Multilayer | 1.2 | 200$\mu$m | 15$\mu$m | 10$\mu$m | 358 |
| B1 | Absence | Multilayer | 1.2 | - | - | - | 230 |

As shown in Table 1, the test cell A1 of Example 1 yields gentle decrease in the discharge capacity with charge and discharge and excellent cycle characteristics compared with the test cell B1 of Comparative Example 1 in which the surface of the second active material layer was not subjected to the groove processing. In addition, the test cell A1 of Example 1 in which the ratio of the thicknesses of the first active material layer and the second active material layer of the negative electrode is 75:25 yields excellent cycle characteristics compared with the test cell A2 of Example 2 in which the ratio of the thicknesses of the first active material layer and the second active material layer is 50:50. As a result of the investigation by the present inventors, it has been found that the effect of improving the cycle characteristics becomes more remarkable when the ratio of the thicknesses of the first active material layer and the second active material layer is set to be within the range of greater than or equal to 80:20 and less than or equal to 60:40 (first active material layer : second active material layer).

[Table 2-1]

| | | Negative electrode | | | | | Evaluation of battery performance |
|---|---|---|---|---|---|---|---|
| | | Groove processing | Layer structure | b2/b1 | W1 | σ(W1) | W2 | Number of cycles |
| A2 | Presence | Multilayer | 1.2 | 200μm | 15μm | 10μm | 313 |
| A3 | Presence | Multilayer | 1.2 | 250μm | 15μm | 10μm | 290 |
| A4 | Presence | Multilayer | 1.2 | 100μm | 15μm | 10μm | 309 |
| A5 | Presence | Multilayer | 1.0 | 200μm | 15μm | 10μm | 285 |
| A6 | Presence | Multilayer | 0.5 | 200μm | 15μm | 10μm | 270 |
| A7 | Presence | Multilayer | 1.5 | 200μm | 15μm | 10μm | 295 |
| A8 | Presence | Multilayer | 1.2 | 200μm | 15μm | 12μm | 313 |
| A9 | Presence | Multilayer | 1.2 | 200μm | 12μm | 10μm | 313 |
| A10 | Presence | Multilayer | 0.4 | 200μm | 15μm | 10μm | 210 |
| A11 | Presence | Multilayer | 2.0 | 200μm | 15μm | 10μm | 215 |
| A12 | Presence | Multilayer | 1.2 | 50μm | 15μm | 10μm | 245 |
| A13 | Presence | Multilayer | 1.2 | 200μm | 15μm | 5μm | 255 |
| A14 | Presence | Multilayer | 1.2 | 300μm | 15μm | 10μm | 250 |
| A15 | Presence | Multilayer | 1.2 | 200μm | 20μm | 10μm | 270 |

[Table 2-2]

| | | Negative electrode | | | | | Evaluation of battery performance |
|---|---|---|---|---|---|---|---|
| | | Groove processing | Layer structure | b2/b1 | W1 | σ(W1) | W2 | Number of cycles |
| B2 | Absence | Multilayer | 1.2 | - | - | - | 180 |
| B3 | Presence | Single layer | - | 200μm | 15μm | 10μm | 148 |
| B4 | Absence | Single layer | - | - | - | - | 99 |

As shown in Table 2-1 and Table 2-2, all of the test cells A2 to A15 of Examples 2 to 15 yield excellent cycle characteristics compared with the test cells B2 to B4 of Comparative Examples 2 to 4. From this result, it is understood that the liquid applying may be effectively improved in the entirety of the electrode assembly and improvement of the cycle characteristics significantly beyond expectation may be achieved by the synergistic effect of the multilayer structure of the active material layers and the grooves on the active material layer surface. In addition, it is understood that the ratio ($b_2/b_1$) of the amounts of binder in the first and second active material layers and the size and pitches (W1, σ(W1), W2) of the grooves formed on the surface of the second active material layer are important factors for improvement of the cycle characteristics.

REFERENCE SIGNS LIST

10 Secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Negative electrode current collector, 31 Negative electrode active material layer, 31A First active material layer, 31B Second active material layer, 32 Groove, 33 Region

**Claims**

1. An electrode for a secondary battery, comprising:

   a current collector; and
   an active material layer formed on the current collector, wherein the active material layer includes:
   a first active material layer formed on the current collector; and
   a second active material layer formed above the current collector via the first active material layer,
   the second active material layer has at least a lower tortuosity, a higher porosity, or an amount of binder contained of greater than or equal to 0.5 times as compared with the first active material layer, and
   on a surface of the second active material layer, a plurality of grooves is formed.

2. The electrode for a secondary battery according to claim 1, wherein

   the plurality of the grooves extends in a first direction at an interval with each other,
   on the surface of the second active material layer, the grooves and regions where the groove is not formed are repeated to form concave-convex parts along a second direction perpendicular to the first direction, and
   a standard deviation of pitches of the concave-convex parts is less than or equal to 20 $\mu$m.

3. The electrode for a secondary battery according to claim 2, wherein an average value of the pitches of the concave-convex parts is greater than or equal to 100 $\mu$m and less than or equal to 250 $\mu$m.

4. The electrode for a secondary battery according to claim 2 or 3, wherein an average value of heights from a deepest position of the groove to a top of the region is greater than or equal to 5 $\mu$m.

5. The electrode for a secondary battery according to any one of claims 1 to 4, wherein

   a tortuosity $\tau_2$ of the second active material layer is smaller than a tortuosity $\tau_1$ of the first active material layer, and
   a ratio ($\tau_2/\tau_1$) of the tortuosity $\tau_2$ to the tortuosity $\tau_1$ satisfies $0.3 \leq (\tau_2/\tau_1) < 1$.

6. The electrode for a secondary battery according to any one of claims 1 to 5, wherein

   an amount $b_2$ of binder contained in the second active material layer is larger than an amount $b_1$ of binder contained in the first active material layer, and
   a ratio ($b_2/b_1$) of the amount $b_2$ of binder to the amount $b_1$ of binder satisfies $1.0 < (b_2/b_1) \leq 1.5$.

7. The electrode for a secondary battery according to any one of claims 1 to 6, wherein

   a thickness of the first active material layer is greater than or equal to 50% and less than or equal to 80% of a thickness of the active material layer, and
   a thickness of the second active material layer is greater than or equal to 20% and less than or equal to 50% of the thickness of the active material layer.

8. A secondary battery, comprising:

   an electrode assembly including a positive electrode and a negative electrode, and
   an electrolyte,
   wherein the electrode for a secondary battery according to any one of claims 1 to 7 is applied for at least one of the positive electrode and the negative electrode.

9. The secondary battery according to claim 8, wherein

   the electrode assembly has a wound structure in which the positive electrode and the negative electrode are wound via a separator, and
the groove is formed along an axial direction of the electrode assembly.

10. The secondary battery according to claim 8 or 9, wherein the negative electrode includes a Si-containing material as a negative electrode active material.

# Figure 1

# Figure 2

Figure 3

Figure 4

Figure 5

## INTERNATIONAL SEARCH REPORT

| International application No. |
| --- |
| **PCT/JP2023/004897** |

**A.    CLASSIFICATION OF SUBJECT MATTER**

*H01M 4/13*(2010.01)i; *H01M 4/134*(2010.01)i; *H01M 4/38*(2006.01)i; *H01M 10/052*(2010.01)i; *H01M 10/0587*(2010.01)i
FI:    H01M4/13; H01M4/134; H01M4/38 Z; H01M10/052; H01M10/0587

According to International Patent Classification (IPC) or to both national classification and IPC

**B.    FIELDS SEARCHED**

Minimum documentation searched (classification system followed by classification symbols)

H01M4/13; H01M4/134; H01M4/38; H01M10/052; H01M10/0587

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 2010-182479 A (TOYOTA INDUSTRIES CORP.) 19 August 2010 (2010-08-19) claim 1, paragraphs [0017], [0065]-[0098] | 1-4, 6-10 |
| A | | 5 |
| Y | WO 2008/053880 A1 (PANASONIC CORP.) 08 May 2008 (2008-05-08) claims 1-5, paragraphs [0035]-[0095] | 1-4, 6-10 |
| A | | 5 |
| Y | KR 10-2016-0050283 A (LG CHEM, LTD.) 11 May 2016 (2016-05-11) claims 1, 5, 10, paragraphs [0034]-[0041] | 1-4, 6-10 |
| A | | 5 |
| A | WO 2015/045341 A1 (SANYO ELECTRIC CO., LTD.) 02 April 2015 (2015-04-02) | 1-10 |

☐ Further documents are listed in the continuation of Box C.          ☑ See patent family annex.

| \* | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 April 2023** | **09 May 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/004897**

| Patent document cited in search report | Publication date (day/month/year) | Patent family member(s) | Publication date (day/month/year) |
|---|---|---|---|
| JP 2010-182479 A | 19 August 2010 | (Family: none) | |
| WO 2008/053880 A1 | 08 May 2008 | US 2010/0279158 A1 paragraphs [0057]-[0120] KR 10-2009-0074175 A CN 101517816 A | |
| KR 10-2016-0050283 A | 11 May 2016 | (Family: none) | |
| WO 2015/045341 A1 | 02 April 2015 | US 2016/0204431 A1 CN 105493317 A | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008053880 A